# EUROPÄISCHE PATENTSCHRIFT

(11) **EP 2 665 610 B1**
(45) Veröffentlichungstag und Bekanntmachung des Hinweises auf die Patenterteilung: **20.08.2014**
(21) Anmeldenummer: 11802657.4
(22) Anmeldetag: 24.12.2011
(51) Int. Cl.: B60G 21/055, B60G 11/18, F16F 1/14, B60G 17/02

(54) **AKTIVER STELLER FÜR EIN KRAFTFAHRZEUGFAHRWERK**
ACTIVE ACTUATOR FOR A MOTOR VEHICLE CHASSIS
DISPOSITIF DE RÉGLAGE ACTIF POUR CHÂSSIS DE VÉHICULE À MOTEUR

(30) Priorität: 21.01.2011 DE 102011009104
(43) Veröffentlichungstag der Anmeldung: 27.11.2013
(73) Patentinhaber: Audi AG, 85045 Ingolstadt (DE)
(72) Erfinder: MICHEL, Wilfried, 93339 Riedenburg (DE)
(86) Internationale Anmeldenummer: PCT/EP2011/006563
(87) Internationale Veröffentlichungsnummer: WO 2012/097855

(56) Entgegenhaltungen:
- EP-A1- 1 958 804
- EP-A2- 0 753 595
- CN-A- 101 865 234
- DE-A1- 4 015 777
- DE-A1- 19 812 532
- JP-A- 2004 162 181

## Beschreibung

Die Erfindung betrifft einen aktive Steller für ein Kraftfahrzeugfahrwerk, umfassend ein geschachteltes Drehfedersystem mit einem Drehfederrohr und einem in diesem aufgenommenen, mit ihm verbundenen Drehstab.

Derartige Steller kommen im Kraftfahrzeugbau im Bereich des Fahrwerks zum Einsatz, beispielsweise in Form von Hinterachsstellern. Hierbei ist üblicherweise jedem Rad ein solcher Steller zugeordnet. Der Steller selbst umfasst einen Stellmotor nebst Getriebe, sowie ein geschachteltes Drehfedersystem, mit dem der Stellmotor zusammenwirkt. Das Drehfedersystem ist als Speicherfedersystem ausgelegt und kann über den Stellmotor gesteuert aufgezogen oder entspannt werden.

Ein solches Drehfedersystem besteht aus einem Drehfederrohr, das mit einem Ende am Ausgang des dem Stellmotor zugeordneten Getriebes angeschlossen ist. Am anderen Ende des Drehfederrohres ist ein Drehstab befestigt, der innerhalb des Drehfederrohres wieder zurückgeführt wird, also das Drehfederrohr durchquert und bis auf die gegenüberliegende Seite des Stellers reicht. Dort ist eine Verbindungsstelle zu einem Fahrwerksbauteil, üblicherweise einer Drehschwinge, realisiert, das heißt, dass dort der Steller fahrwerkseitig angebunden ist. Durch die Ausgestaltung des Drehfedersystems als geschachteltes System und die daraus resultierende Hin- und Rückführung von Drehfederrohr und Drehstab wird somit Federlänge gewonnen, ohne viel Platz zu benötigen. Die gewonnene Federlänge ermöglicht auch die Speicherung deutlich größerer Federkräfte, die im Betrieb genutzt werden können.

In der Montagesituation ist der Steller fest beispielsweise mit einem Hilfsrahmen verschraubt, so dass aktiv Kräfte gestellt werden können. Über das Drehfedersystem wird im Wechselspiel der Ein- und Ausfederbewegung des Rades Federarbeit aufgenommen respektive abgegeben. Die Aufnahme respektive Abgabe ist möglich, da in Folge der Kopplung des Stellers mit dem Rad die jeweilige Einfeder- oder Ausfederbewegung des Rades auf den Steller durchgekoppelt wird. Neben der reinen Speicherung und Abgabe der einfeder- und ausfederbedingten Federarbeit ist es über den Antrieb auch möglich, jederzeit gezielt über den Stellmotor Momente zu überlagern, also die Drehfeder, je nach Erfordernis, aufzuziehen oder zu entspannen. Über den Steller müssen jedoch, nachdem die wesentlichen Kräfte über die Hauptfeder des Rades aufgenommen respektive gestellt werden, nur anteilige Stellkräfte zur Radlaständerung gestellt werden. Es findet also eine ständige Überlagerung der Federkräfte aus Hauptfeder und Drehfedersystem statt, je nachdem wie die Fahrsituation dies gerade erfordert respektive die Steuerung, über die der Stellmotor gesteuert wird, dies vorgibt. Zur Kopplung des Stellers ist dieser wie beschrieben einerseits beispielsweise mit einem Hilfsrahmen verbunden, andererseits mit einer Drehschwinge, an deren Ende wiederum eine Koppel angelenkt ist, ausgestattet. Die Koppel verbindet die Drehschwinge mit einem Trapezlenker, der seinerseits mit dem Rad verbunden ist. Damit können die im Steller erzeugten Drehmomente über den Lastpfad Stellmotor - Getriebe - Drehfeder - Schwinge - Koppel - Trapezlenker - Rad letztlich als lineare Stellkräfte auf das Rad übertragen werden.

Bei bekannten Stellern bestehen Drehfederrohr und Drehstab aus Stahl, die an einem Ende miteinander fest verbunden sind, um die erforderlichen Drehmomente aufeinander übertragen zu können. Am anderen Ende ist der Drehstab wie beschrieben mit der Drehschwinge gekoppelt, beispielsweise über eine lösbare Kerbverzahnungsverbindung, die ebenfalls die Übertragung zu stellender Drehmomente in beiden Drehrichtungen ermöglicht.

Wenngleich derartige bekannte Steller in hohem Maße funktionell sind, was ihren Einsatz rechtfertigt, so sind sie auf der anderen Seite doch beachtlich schwer, was nicht zuletzt daraus resultiert, dass Drehfederrohr und insbesondere der aus einem Vollmaterial bestehende Drehstab aus Stahl gefertigt sind, wobei insbesondere der Drehstab, da er das längste Bauteil ist und den Steller vollständig durchsetzt, gewichtserhöhend ist.

Der Erfindung liegt damit das Problem zugrunde, einen Steller anzugeben, der einerseits die Übertragung hoher Drehmomente ermöglicht, andererseits aber hinsichtlich seines Gewichts verbessert ist.

Zur Lösung dieses Problems ist erfindungsgemäß vorgesehen, dass das Drehfederrohr aus Stahl und der Drehstab aus Titan oder einer Titanlegierung besteht, oder umgekehrt, wobei das Drehfederrohr und der Drehstab über eine Schweißverbindung verbunden sind, wobei zwischen das Drehfederrohr und den Drehstab im Verbindungsbereich eine Zwischenlage eingebracht ist, die mit dem Drehfederrohr und dem Drehstab verschweißt ist.

Bei dem erfindungsgemäßen Steller besteht eines der das Drehfedersystem bildenden Bauteile, also entweder Drehfederrohr oder Drehstab, aus Titan oder einer Titanlegierung, wobei bevorzugt der Drehstab aus Titan oder einer Titanlegierung gefertigt ist, da er das volumen- und gewichtsmäßig größte Bauteil ist. Das andere Bauteil, also bevorzugt das Drehfederrohr selbst, ist demgegenüber aus Stahl gefertigt. Der Ersatz des Stahls durch Titan oder eine Titanlegierung bringt einen beachtlichen Gewichtsvorteil, nachdem beispielsweise Titan nur ca. 57 % der Dichte von Stahl aufweist, so dass sich, insbesondere bei einer Herstellung des Drehstabs hieraus, eine gravierende Gewichtsreduzierung erreichen lässt. Diese wird auch erreicht, wenn anstelle reinen Titans auf entsprechende Titanlegierungen zurückgegriffen wird, beispielsweise Ti-Al-Legierungen wie z. B. Ti-6Al-4V, wobei als Legierungszusätze aber auch Sn, Zr oder Mo in verwendbaren Titanlegierungen vorgesehen sein können.

Weiter ist erfindungsgemäß vorgesehen, dass im Verbindungsbereich zwischen Drehfederrohr und Drehstab, also dem Bereich, wo die Schweißverbindung realisiert wird, eine Zwischenlage eingebracht ist, die mit dem Drehfederrohr einerseits und dem Drehstabrohr andererseits verschweißt ist. Das unmittelbare Verschweißen des Titan- oder Titanlegierungs-Drehstabs mit dem Stahl-Drehfederrohr kann zu Schwierigkeiten in Folge der starken Versprödung im Schweißbereich aufgrund der Bildung von intermetallischen Phasen führen. Diese Probleme resultieren aus der geringen Löslichkeit des Eisens im Titan, so dass sich beim Schweißen von Titan mit Stahl sehr harte und spröde intermetallische Phasen wie z. B. TiFe und TiFe₂, bilden. Da die beim erfindungsgemäßen Steller vorgesehene Schweißverbindung hohen, häufig wechselnden Lasten unterworfen ist, ist eine zu spröde, harte Schweißverbindung in diesem Bereich nicht zweckdienlich.

Deshalb ist erfindungsgemäß vorgesehen, im Verbindungsbereich, also der Verschweißung, eine Zwischenlage einzubringen, die ihrerseits sowohl mit dem Drehfederrohr als auch mit dem Drehstab verschweißt ist. Diese Schweißzwischenlage ist aus einem Werkstoff, der sich sowohl mit Titan oder der Titanlegierung als auch dem Stahl verschweißen lässt, ohne dass spröde Phasen auftreten respektive sich eine harte, spröde Schweißverbindung ausbildet. Als Materialien, aus denen eine solche Zwischenlage gebildet sein kann, sind primär Vanadium oder Kupfer zu nennen, wobei natürlich andere Materialien, auch gegebenenfalls auf Legierungsbasis, nicht ausgeschlossen sind. Die jeweiligen Löslichkeiten des Stahls respektive Titans in dem Zwischenlagenmaterial sind deutlich größer als bei einer Direktverschweißung von Stahl und Titan, so dass sich keine spröden intermetallischen Phasen ausbilden und eine den Festigkeitsanforderungen entsprechende Schweißverbindung, die auch die Übertragung hoher Drehmomente zulässt, ausgebildet werden kann.

Damit zeichnet sich der erfindungsgemäße Steller einerseits durch ein geringes Gewicht aus, resultierend aus der Verwendung von Titan oder einer Titanlegierung zur Fertigung insbesondere des Drehstabs, alternativ aber auch des Drehfederrohrs. Darüber hinaus zeichnet sich der Steller durch eine hochbelastbare Schweißverbindung zwischen den Federbauteilen im Verbindungsbereich, über welchen die hohen und häufig und schnell wechselnden Drehmomente übertragen werden, aus.

Die Zwischenlage selbst ist bevorzugt als zylindrische Hülse ausgeführt, die zur Fertigung beispielsweise in das Drehfederrohr eingesetzt wird, wonach der Drehstab eingeschoben wird. Alternativ kann natürlich auch die Hülse zunächst auf den Drehstab aufgesetzt werden, wonach dieser samt Hülse in das Drehfederrohr eingeschoben wird. Die Bauteilkombination wird sodann einem Schweißgerät zugeführt, beispielsweise einem Schweißroboter, der dann die Verschweißung vornimmt.

Zur weiteren Gewichtersparnis ist es von Vorteil, wenn der Drehstab einen möglichst kleinen Durchmesser aufweist, der jedoch den geforderten Festigkeitsanforderungen genügt. Gleichwohl ist die Schweißverbindung möglichst großflächig zu erzeugen, um einen festen Bauteilverbund zu erzielen, der die Übertragung hoher Drehmomente zulässt. Aus diesem Grund sieht eine zweckmäßige Weiterbildung der Erfindung vor, dass am Drehstab endseitig ein Verbindungsbereich mit einem gegenüber dem übrigen Stabdurchmesser vergrößerten Außendurchmesser und gegebenenfalls am Drehfederrohr endseitig ein Verbindungsabschnitt mit einem gegenüber dem übrigen Rohrdurchmesser kleinerem Innendurchmesser vorgesehen ist, dessen oder deren jeweilige axiale Länge im Wesentlichen der Länge der Zwischenlage, also bevorzugt der Hülse, entspricht. Das heißt, das der Drehstab im Endbereich im Durchmesser etwas aufgeweitet ist, während gegebenenfalls der Durchmesser des Drehfederrohrs in diesem Bereich etwas reduziert ist, so dass sich ein axial in seiner Länge definierter Verbindungsbereich ergibt. Dieser Verbindungsbereich entspricht in seiner Länge in etwa der Zwischenlagenhülse, so dass sich also eine definierte und großflächige Schweißverbindung realisieren lässt.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Schnittansicht durch einen erfindungsgemäßen Steller mit geschachteltem Drehfedersystem in Form eines aktiven Hinterachssteller, und
- Fig. 2: eine vergrößerte Detailansicht des Verbindungsbereichs von Drehfederrohr und Drehstab gemäß Einzelheit II in Fig. 1.

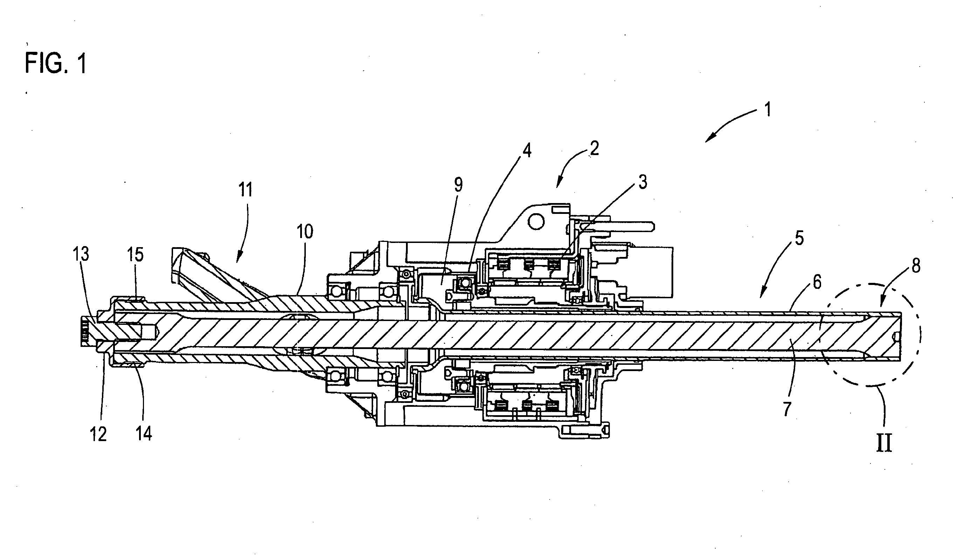

Fig. 1 zeigt in Form einer Schnittdarstellung einen erfindungsgemäßen aktiven Steller 1, umfassend einen Aktuator 2 in Form eines Elektromotors 3 mit zugeordnetem Getriebe 4, beispielsweise einem Harmonic-Drive-Getriebe oder einem Planetengetriebe.

Vorgesehen ist ferner ein geschachteltes Drehfedersystem 5 umfassend ein außen liegendes, zylindrisches Drehfederrohr 6 und einen innen liegenden, aus einem Vollmaterial gefertigten Drehstab 7. Beide sind in einem Verbindungsbereich 8 über eine Schweißverbindung miteinander verbunden, worauf nachfolgend noch näher eingegangen wird.

Das Drehfederrohr 6 ist im Bereich des Getriebeausgangs 9 mit dem Getriebe gekoppelt. Ausgehend von Fig. 1 erstreckt es sich von dort zur rechten Seite hin. Am Ende ist der Verbindungsbereich 8 angeordnet, wo die Verbindung zum Drehstab 7 erfolgt. Dieser erstreckt sich in entgegengesetzter Richtung zurück durch das Drehfederrohr 6 sowie den hohlzylindrischen Abschnitt 10 einer Drehschwinge 11, mit der der Drehstab 7 bewegungsgekoppelt ist. Hierzu ist eine Hülse 12 vorgesehen, die über eine Schraube 13 mit dem Drehstab 7 verschraubt ist. Die Hülse 12 weist eine Innenverzahnung 14 auf, die in eine Außenverzahnung 15 des zylindrischen Abschnitts 10 der Drehschwinge 11 eingreift. Der hohlzylindrische Abschnitt 10 ist über geeignete Lagermittel am Gehäuse des Aktors 2 drehgelagert, wie natürlich auch das Drehfederrohr 6 entsprechend aktorseitig drehgelagert ist.

Im Betrieb wird für eine aktive Stellbewegung über den Aktor 2, also den Elektromotor nebst nachgeschalteten Getriebe 4 ein Drehmoment auf das Drehfederrohr 6 aufgebracht, das heißt, diese wird um seine Längsachse gedreht. Diese Drehung respektive das Drehmoment wird über den Verbindungsbereich 8 auf den Drehstab 7 übertragen, der das Drehmoment seinerseits wiederum über die Verbindung zu dem hohlzylindrischen Abschnitt 10 auf die Drehschwinge 11 überträgt, von wo aus das Moment, in letzter Konsequenz als Linearbewegung, radseitig eingetragen wird. Das Drehfedersystem wirkt als Federspeicher, es ist letztlich ein Torsionssystem, das aufgrund der gegebenen inhärenten Elastizitäten in der Lage ist, Federarbeit zu speichern respektive abzugeben. Infolge des geschachtelten Aufbaus ist eine beachtliche Feder- oder Torsionslänge realisiert, die die Speicherung respektive Übertragung auch großer Kräfte beziehungsweise Momente ermöglicht.

Zur Reduzierung des Gewichts des Stellers 1 ist innerhalb des Drehfedersystems nur das hohlzylindrische Drehfederrohr 6 aus Stahl gefertigt, während der aus Vollmaterial bestehende Drehstab aus Titan oder einer Titanlegierung gefertigt ist. Titan respektive entsprechende, für den Einsatzzweck geeignete Titanlegierungen weisen eine verglichen mit Stahl deutlich niedrigere Dichte auf, das heißt, dass ein vergleichbar belastbares Bauteil aus diesen Materialien folglich weniger wiegt als ein entsprechendes Stahlbauteil. Da der Drehstab 7 als Vollmaterialbauteil und im Hinblick auf seine beachtliche Länge einen großen Anteil am Gesamtgewicht des Stellers ausmacht, ist dessen Fertigung aus Titan oder einer Titanlegierung besonders geeignet, Gewicht zu sparen.

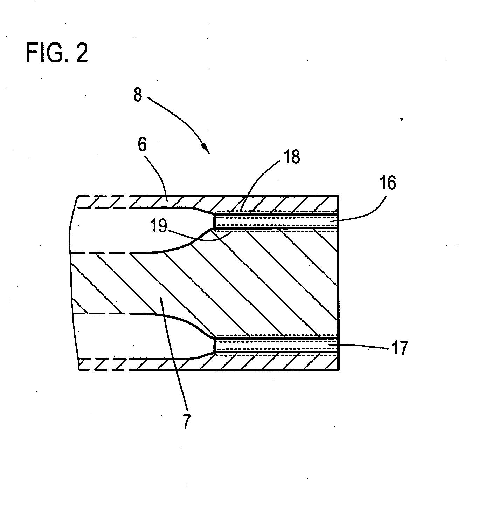

Um trotz unterschiedlicher miteinander zu verbindender Materialien, nämlich Stahl einerseits und Titan beziehungsweise eine Titanlegierung andererseits, eine in gewissem Grad elastische, also verformungsfähige Schweißverbindung, also eine stoffschlüssige Verbindung zwischen dem Drehfederrohr 6 und dem Drehstab 7 zu realisieren, wird im Verbindungsbereich eine Zwischenlage 16 eingebracht, die vom Material her geeignet ist, eine gute, nicht zu harte und nicht zu spröde Schweißverbindung sowohl mit dem Stahlbauteil als auch mit dem Titan- oder Titanlegierungsbauteil einzugehen. Eine Schnittansicht durch den Verbindungsbereich 8, der mittels einer solchen Zwischenlage 16 realisiert ist, ist in Fig. 2 gezeigt.

In dieser Schnittansicht ist zum einen das Ende des Drehfederrohrs 6, zum anderen das Ende des Drehstabes 7 gezeigt. Das Drehfederrohr 6 ist im Innendurchmesser im Endbereich etwas reduziert, wie Fig. 2 zu entnehmen ist, das heißt, dass das Drehfederrohr endseitig etwas eingeschnürt ist. Demgegenüber ist der Drehstab 7 im Endbereich vom Außendurchmesser her etwas vergrößert, siehe Fig. 2, verglichen mit dem übrigen Stabquerschnitt. Das heißt, dass der übrige Stabquerschnitt durchmessermäßig verglichen mit dem Endbereich kleiner ist, mithin also der Stabdurchmesser weitest möglich reduziert ist, um das Gewicht des Drehstabs so gering wie möglich zu halten, gleichermaßen aber noch die gewünschten Festigkeitsanforderungen zu erfüllen.

Beide im Durchmesser variierenden Endbereiche verlaufen axial gesehen ein Stück weit parallel und definieren letztlich den Verbindungsbereich, in dem die Schweißverbindung erfolgt. In diesen Verbindungsbereich ist die Zwischenlage 16, hier in Form einer Hülse 17, eingesetzt. Die Länge der Hülse 17 entspricht im Wesentlichen dem Verbindungsbereich 8, also dem Bereich, in dem die variierenden Durchmesser des Drehfederrohrs 6 und des Drehstabs 7 einander gegenüberliegen.

Die Zwischenlage 16 besteht bevorzugt aus Vanadium, denkbar ist aber auch die Verwendung von Kupfer. Beide Materialien können sowohl mit dem Stahl als auch dem Titan oder der Titanlegierung verschweißt werden, das heißt, dass hinreichend elastische, verformungsfähige Schweißverbindungen zwischen dem Zwischenlagenmaterial und dem Stahl einerseits sowie dem Zwischenlagenmaterial und dem Titan respektive der Titanlegierung andererseits erzielt werden können. Dies ist aufgrund der guten Löslichkeit der einzelnen Schweißverbindungskomponenten im jeweiligen Material möglich. Fig. 2 zeigt als Prinzipskizze gestrichelt die sich jeweils ergebenden Schweißverbindungsbereiche 18 und 19, wobei sich der Schweißverbindungsbereich 18 zwischen der Zwischenlage 16 und dem Drehfederrohr 6 und der Schweißverbindungsbereich 19 zwischen der Zwischenlage 16 und dem Drehstab 7 ausbildet.

Fig. 2 ist lediglich eine Prinzipskizze, das heißt, dass die gezeigten Durchmesser selbstverständlich nicht die tatsächlichen Bauteildimensionen wiedergeben. Vielmehr ist die Hülse 17 in ihrer Wandstärke (ca. 1, 5 - 3 mm) möglichst klein zu wählen, damit sich hieraus keine radiale Vergrößerung ergibt.

Abschließend ist festzuhalten, dass selbstverständlich der materialmäßige Aufbau umgekehrt sein kann, das heißt, dass das Drehfederrohr 6 aus Titan oder einer Titanlegierung besteht, während der Drehstab 7 aus Stahl gefertigt ist. Auch hierüber kann eine Gewichtsreduzierung erreicht werden, wenngleich natürlich nicht in dem Maße wie bei einer Fertigung des Drehstabs aus Titan oder der Titanlegierung. Jedoch erfolgt auch in diesem Fall die Realisierung der Schweißverbindung über die beschriebene Zwischenlage 16.

Schließlich ist die durchmessermäßige Einschnürung im Endbereich des Drehfederrohres 6 nicht unbedingt erforderlich, vielmehr könnte dort der Innendurchmesser unverändert bleiben, während lediglich der Außendurchmesser des Drehstabes 7 entsprechend vergrößert ist.

## Patentansprüche

1. Aktiver Steller für ein Kraftfahrzeugfahrwerk, umfassend ein geschachteltes Drehfedersystem mit einem Drehfederrohr und einem in diesem aufgenommenen, mit ihm verbundenen Drehstab,
**dadurch gekennzeichnet,**
**dass** das Drehfederrohr (6) aus Stahl und der Drehstab (7) aus Titan oder einer Titanlegierung besteht, oder umgekehrt, wobei das Drehfederrohr (6) und der Drehstab (7) über eine Schweißverbindung verbunden sind, wobei zwischen das Drehfederrohr (6) und den Drehstab (7) im Verbindungsbereich (8) eine Zwischenlage (16) eingebracht ist, die mit dem Drehfederrohr (6) und dem Drehstab (7) verschweißt ist.

2. Steller nach Anspruch 1,
**dadurch gekennzeichnet,**
**dass** die Zwischenlage (16) eine zylindrische Hülse (17) ist.

3. Steller nach Anspruch 2,
**dadurch gekennzeichnet,**
**dass** die Zwischenlage (16) aus Vanadium oder Kupfer ist.

4. Steller nach einem der vorangehenden Ansprüche,
**dadurch gekennzeichnet,**
**dass** am Drehstab (7) endseitig ein Verbindungsabschnitt mit einem gegenüber dem übrigen Stabdurchmesser vergrößerten Außendurchmesser und gegebenenfalls am Drehfederrohr (6) endseitig ein Verbindungsabschnitt mit einem gegenüber dem übrigen Rohrdurchmesser kleinerem Innendurchmesser vorgesehen ist, dessen oder deren jeweilige axiale Länge im wesentlichen der Länge der Zwischenlage (16) entspricht.

## Claims

1. Active actuator for a motor vehicle chassis, comprising a nested torsion spring system having a torsion spring tube and a torsion bar which is accommodated in and connected to the latter,
**characterised in that** the torsion spring tube (6) consists of steel and the torsion bar (7) consists of titanium or a titanium alloy, or *vice versa,* wherein the torsion spring tube (6) and the torsion bar (7) are connected by a weld joint, and wherein an intermediate layer (16) is introduced in the connection region (8) between the torsion spring tube (6) and the torsion bar (7), said intermediate layer being welded to the torsion spring tube (6) and the torsion bar (7)

2. Actuator according to claim 1, **characterised in that** the intermediate layer (16) is a cylindrical sleeve (17).

3. Actuator according to claim 2, **characterised in that** the intermediate layer (16) is of vanadium or copper.

4. Actuator according to one of the preceding claims, **characterised in that** provided on the end of the torsion bar (7) is a connecting portion having an outer diameter greater than that of the remainder of the bar, and optionally provided on the end of the torsion spring tube (6) is a connecting portion having an inner diameter smaller than the diameter of the remainder of the tube, the axial length of said portion or portions substantially corresponding to the length of the intermediate layer (16).

## Revendications

1. Dispositif de réglage actif pour un châssis de véhicule à moteur, comprenant un système à ressort de torsion emboîté avec un tube de ressort de torsion et une barre de torsion reçue dans celui-ci, reliée à celui-ci,
**caractérisé en ce**
**que** le tube de ressort de torsion (6) est en acier et la barre de torsion (7) est en titane ou un alliage de titane, ou inversement, le tube de ressort de torsion (6) et la barre de torsion (7) étant reliés par une liaison de soudage, une couche intermédiaire (16) étant introduite entre le tube de ressort de torsion (6) et la barre de torsion (7) dans la zone de liaison (8), laquelle couche est soudée au tube de ressort de torsion (6) et à la barre de torsion (7).

2. Dispositif de réglage selon la revendication 1,
**caractérisé en ce**
**que** la couche intermédiaire (16) est une douille cylindrique (17).

3. Dispositif de réglage selon la revendication 2,
**caractérisé en ce**
**que** la couche intermédiaire (16) est en vanadium ou en cuivre.

4. Dispositif de réglage selon l'une quelconque des revendications précédentes,
**caractérisé en ce**
**qu'**est prévue sur la barre de torsion (7) côté extrémité une section de liaison avec un diamètre extérieur agrandi par rapport au diamètre de barre restant et éventuellement sur le tube de ressort de torsion (6) côté extrémité une section de liaison avec un diamètre intérieur plus petit que le diamètre de tube restant, dont la longueur axiale respective correspond sensiblement à la longueur de la couche intermédiaire (16).
